# EUROPÄISCHE PATENTSCHRIFT

(11) **EP 3 248 450 B1**
(45) Veröffentlichungstag und Bekanntmachung des Hinweises auf die Patenterteilung: **23.02.2022**
(21) Anmeldenummer: 17000617.5
(22) Anmeldetag: 11.04.2017
(51) Int. Cl.: A01B 73/04

(54) **LANDWIRTSCHAFTLICHE ARBEITSMASCHINE MIT VERBESSERTER TRANSPORTSICHERUNG**
AGRICULTURAL WORKING MACHINE WITH IMPROVED SECURING DURING TRANSPORT
ENGIN AGRICOLE COMPRENANT UNE SÉCURITÉ DE TRANSPORT AMÉLIORÉE

(30) Priorität: 18.04.2016 DE 202016002490 U
(43) Veröffentlichungstag der Anmeldung: 29.11.2017
(73) Patentinhaber: Maschinenfabrik Bernard Krone GmbH & Co. KG, 48480 Spelle (DE)
(72) Erfinder: Beulting, Hubert, 48477 Hörstel (DE)

(56) Entgegenhaltungen:
- EP-A1- 1 800 529
- EP-A1- 2 347 644
- EP-A2- 2 923 550
- DE-A1-102006 010 545
- US-A1- 2013 098 645

## Beschreibung

Die Erfindung befasst sich mit landwirtschaftlichen Arbeitsmaschinen, deren Arbeitsgeräte mit Hilfe von Auslegerarmen an einem Grundrahmen schwenkbar und/oder klappbar montiert sind, wie zum Beispiel aus den Dokumenten US2013/098645A, DE102006010545A, EP2923550A, EP1800529A und EP2347644A bekannt.

In der Landwirtschaft werden seit Jahrzehnten Maschinen auf dem Feld eingesetzt, die durch ihre Arbeitsbreite einen Transport auf den Straßen nicht nur erschweren, sondern auch mit den Verkehrsvorschriften der meisten Länder nicht in Einklang zu bringen sind. Besonders die Hersteller von Arbeitsmaschinen, deren Arbeitsbreiten von 3 m bis über 20m reichen, nutzen daher immer ideenreichere Methoden und Mechanismen, um besagte Arbeitsmaschinen nach dem Einsatz auf dem Feld sicher und ordnungsgerecht auf den Straßen transportieren zu können.

In vielen Bereichen haben sich Maschinen bewährt, deren Arbeitsgeräte an Auslegern angebracht sind, welche nach dem Einsatz beispielsweise an einem Fahrgestell von einer horizontalen Arbeitsstellung in eine größtenteils vertikale Transportstellung geklappt werden können. So werden zum Beispiel Schwader oder Mähmaschinen häufig auf ebendiese Weise konstruiert, um den Benutzern schnell und einfach gewaltige Schlagkraft mit ihren Maschinen zu ermöglichen. Für den Transport auf der Straße ist es hierbei allerdings sinnvoll, Vorrichtungen zur Sicherung der geklappten oder verschwenkten Arbeitsgeräte zu integrieren, um auch bei möglichen Schäden an den Aktoren oder deren Zuleitungen keine Gefährdung des Straßenverkehrs zu riskieren. Der Stand der Technik gibt hierzu eine Vielzahl an Vorrichtungen her.

Weiterhin ist es oftmals wünschenswert und notwendig, bedingt durch die großen Arbeitsgeräte und dem damit einhergehenden, beachtlichen Gewicht, die Arbeitsgeräte vom Boden anzuheben, um diese nicht mit ihrem gesamten Gewicht auf den zu bearbeitenden Flächen wirken zu lassen. Folglich kommen Vorrichtungen zur Bodenentlastung in vielen Variationen zum Einsatz. Dabei konnten sich zwei grundsätzliche Vorgehensweisen behaupten. Zum einen die mechanische Entlastung, bei der mechanische Federn eingesetzt werden, um das auf den Erdboden wirkende Gewicht der Arbeitsgeräte zu verringern. Diese haben zwar den Vorteil, direkt auf Veränderungen in der Bodenbeschaffenheit reagieren zu können, sind jedoch aufgrund ihrer Federkraft-Kennlinien schwer auf zu ändernde Entlastungswerte anzupassen. Zum anderen gibt es die hydraulische Bodenentlastung, wobei Hydraulikzylinder derart angesteuert werden, dass durch verschiedene Druckspeichervorrichtungen Ausgleichskräfte geschaffen werden. Diese Bodenentlastung besitzt den Vorteil, komfortabel durch Steuergeräte und daran angeschlossene Bedieneinheiten eingestellt und angepasst werden zu können, reagierte jedoch bisher oft nicht direkt genug bei sich verändernden Bodenbeschaffenheiten. Dieser Nachteil ist mittlerweile aufgrund von zahlreichen Optimierungen im Bereich der Steuerungs- und Regelungstechnik, sowie verbesserten, angepassten Fluidleitungen minimiert worden und übertrifft daher immer häufiger die mechanische Bodenentlastung durch mechanische Federn.

Der aktuelle Stand der Technik behandelt zuvor genannte Lösungen, wobei sich besonders beim Einsatz der immer effektiveren und gewichtssparenden Bodenentlastung durch einfachwirkende Hydraulikzylinder eine neue Herausforderung ergibt. Denn sobald Ausleger eingesetzt werden, um die schlagkräftige Arbeitsbreite für den Straßentransport zu verringern, stoßen einfachwirkende Zylinder bald an ihre Grenzen. Um die Transportbreite weiter zu verringern und/oder um den Schwerpunkt von Maschinen mit Auslegern bei eingenommener Transportstellung positiv zu beeinflussen, werden die Arbeitsgeräte oft über eine vertikale Ebene am Klapppunkt des Auslegers hinaus verschwenkt.

Sobald die Maschine jetzt jedoch wieder in die Arbeitsstellung verfahren werden muss, ist ein einfachwirkender Zylinder, der zur Bodenentlastung vorgesehen ist, nicht in der Lage, das Arbeitsgerät über die vertikale Ebene aus dem negativen Winkel hinaus zu schieben. Dieser Umstand besteht ebenso bei Maschinen, deren Arbeitsgeräte in Hanglage eingesetzt werden, sobald das abzusenkende Arbeitsgerät dem Berg zugewandt ist. Bisher ist diese Herausforderung Im Stand der Technik durch doppeltwirkende Hydraulikzylinder gelöst worden. Jedoch ist eine Bodenanpassung mit doppeltwirkenden Hydraulikzylindern wegen hoher Reibungsverluste durch die Ölverdrängung träge im Vergleich zu einfachwirkenden Hydraulikzylindern und weist daher eine erhöhte Hysterese auf, wodurch eine optimale Bodenanpassung erheblich erschwert wird.

Aufgabe der Erfindung Ist es folglich, einen Mechanismus anzubieten, welcher ein landwirtschaftliches Arbeitsgerät, das an einem Auslegerarm montiert ist, In einer Transportstellung sichert und bei einem Einsatz von einfachwirkenden Zylindern, besonders in Hanglagen, den kombinierten Schwerpunkt von Arbeitsmaschine und Auslegerarm zumindest sicher über eine Lotgerade hinaus befördern kann, sodass das Überführen der Arbeitsmaschine in eine Arbeitsstellung sichergestellt Ist.

Gelöst wird diese Aufgabe durch die kennzeichnenden Merkmale des Anspruchs 1. Vorteilhafte Weiterbildungen der Erfindung sind Gegenstand der weiteren Ansprüche und Ausführungsbeispiele.

Gemäß der Erfindung wird zunächst ein Ausleger mit einem Halteelement versehen. An diesem Halteelement kann somit ein oberer Abschnitt einer zur Sicherungsvorrichtung zugeordneten, besonders geformten Klinke derart eingreifen, dass besagter oberer Abschnitt dieser Klinke den Auslegerarm und ein daran montiertes Arbeitsgerät in einer Transportstellung gegen unerwünschtes Ausklappen absichert. Sobald das Arbeitsgerät durch den Auslegerarm in eine Arbeitsstellung abgesenkt werden soll, wird mit Hilfe eines Aktors die Klinke in eine öffnende Position verfahren, in welcher der obere Teil dieser Klinke das Halteelement freigibt und ein unterer Abschnitt dieser Klinke gegen den Ausleger, oder ein daran angeordnetes Bauteil, wirkt. Durch den Druck, der von dem Aktor und dem unteren Abschnitt der Klinke auf den Auslegerarm ausgeübt wird, wird dieser von seiner etwa vertikalen Transportposition zunächst so weit geklappt, dass auch in einer Hanglage, eine lotrechte Position des Auslegers und/oder des Arbeitsgerätes so weit überschritten wird, dass die Gewichtskraft des Arbeitsgerätes und/oder des Auslegers zum Absenken ausreicht. Zum kontrollierten Absenken des Arbeitsgerätes, wird vorgeschlagen, die entsprechenden eingesetzten Mittel zur Bodenentlastung zuzuschalten, sobald der Ausleger in einem bestimmten Winkel von der Lotgeraden in Richtung Arbeitsposition verdrängt wurde.

Bevorzugt wird in diesem Zusammenhang eine Ausführung, deren Klinkenmechanismus durch einen doppelwirkenden Hydraulikzylinder betätigt wird, wobei der Zylinder unterhalb einer Lagerung der Klinke schwenkbar befestigt wird. Der Ausleger wird in dieser Ausführung mit einer Laufrolle oder einem Gleitelement an einem weiteren Bolzen versehen. Leitet der Benutzer einen Wechsel von der Transportstellung in die Arbeitsstellung ein, so wirkt der untere Klinkenabschnitt auf die Laufrolle/das Gleitelement und drückt den Ausleger vom Maschinenrahmen weg. Trickreich Ist hierbei eine Ausführung des unteren Klinkenabschnittes als Kurvenbahn. Sobald die notwendige Schräglage erreicht ist sorgt die Fluidverdrängung bei einem einfachwirkenden Hydraulikzylinder, der zwecks Bodenentlastung und Aushebefunktion als dynamischer und reibungsoptimierter Zugzylinder ausgeführt ist und zwischen Hauptrahmen und Auslegerarm beweglich befestigt ist, für ein verlangsamtes und sicheres Absenken der Arbeitsmaschine, zumindest bis zur Vorgewendestellung. In dieser Position kann beispielsweise durch aktuelle Ventiltechnik ein Stopp der Absenkbewegung eingeleitet werden und/oder die Arbeitsmaschine sanft in eine Arbeitsposition abgelassen werden.

In einer weiteren Ausführung wird der Klinkenmechanismus anstelle eines doppelwirkenden Zylinders von einem einfachwirkenden Zylinder in eine Position verschoben, in der die Gewichtskraft zum Absenken der Arbeitsmaschine ausreicht. Zur Sicherung in der Transportstellung sichert eine mechanische Feder die Klinke und hält somit den Ausleger inklusive der Arbeitsmaschine in Position. Dazu kann ein Haltebolzen und/oder eine Laufrolle die Klinke zunächst zurückschieben, bis besagter Bolzen von der Klinke umschlossen und somit gesichert wird. Sinnvoll ist jedoch auch hier ein Betätigen der Klinke durch den einfachwirkenden Zylinder, sodass weder die Klinke, noch die Laufrolle, bzw. der Haltebolzen unnötig belastet werden. In dieser Ausführung muss die mechanische Feder stark genug ausgeführt sein, dass sowohl die einfachwirkende Kolbenzylindereinheit wieder eingefahren werden kann, als auch eine ausreichende Sicherung der Klinke und somit des Auslegers gewährleistet werden kann.

Eine denkbare Ausführung sieht vor, den Sicherungsmechanismus indirekt zu betätigen, Indem ein Gestänge, hier ist eine Koppelstange denkbar, eingesetzt wird. Dadurch können durch einen Aktor mehrere Transportsicherungen angesteuert werden. Das ermöglicht bei Maschinen mit zwei oder mehr Auslegern eine kompaktere Bauweise, oder wenigstens ein konstruktiv flexibles Unterbringen des Aktors. Ähnliche Vorteile hat der Einsatz einer Seilkonstruktion, wie ein Seilzug. Dieser kann unter anderem mit Umlenkrollen noch flexibler in und/oder an der Maschine montiert werden, um die Transportsicherung zu öffnen. Ein Schließen und Sichern des Auslegers wäre bei dem Einsatz eines Seilzuges durch einen geführten Bowdenzug oder die Nutzung einer Feder, ähnlich der Ausführung mit einfachwirkender Kolbenzylindereinheit, möglich.

Eine sinnvolle Alternative zu der beschriebenen Klinkenform, die durch eine Kurvenbahn in der Lage ist, einen Ausleger direkt oder indirekt vom Maschinenrahmen zu drücken, kann durch bekannte Mechanismen erreicht werden. Auch hier kommen beispielsweise Koppelstangen, Seilzüge oder auch eine Kombination beider durchaus in Frage. So kann der Aktor zum Beispiel eine Klinke betätigen, die an einem Ende mit einer Koppelstange verbunden ist. Sobald die Transportsicherung gelöst wird, stößt die Koppelstange den Ausleger vom Maschinenrahmen ab. Auch hier erfolgt die zwangsgeführte Klappbewegung optimaler Weise bis über eine Lotgerade hinaus. Bei dem Einsatz eines Seilzuges kann der Ausleger durch Umlenkrollen um die Kippachse gezogen werden, sobald die Transportsicherung gelöst wird.

Eine detaillierte Beschreibung eines Gegenstandes der Erfindung erfolgt nun anhand eines Ausführungsbeispiels. Die beanspruchte Erfindung beschränkt sich dabei nicht auf die verdeutlichte Ausführungsform. In den Zeichnungen wird folgendes dargestellt:
Fig.1: Darstellung einer selbstfahrenden landwirtschaftlichen Arbeitsmaschine, mit an einem Hauptrahmen montierten Auslegerarmen und daran befindlichen Arbeitsgeräten;
Fig.2: eine erfindungsgemäße Sicherungsvorrichtung an einem Hauptrahmen und ein dazugehöriger Auslegerarm sowie einen Teilbereich eines daran befindlichen Arbeitsgerätes in der Transportstellung;
Fig.3: die erfindungsgemäße Sicherungsvorrichtung wie in Fig.2, in einer Momentdarstellung während des Ausklappvorganges des Auslegers und daran befindlichem Arbeitsgerät;
**Fig.4****:** die erfindungsgemäße Sicherungsvorrichtung wie in Fig.2 und Fig.3 in einer Momentdarstellung während des Anklappvorgangs des Auslegers und daran befindlichem Arbeitsgerät.

### Bezugszeichenliste:

- 1.: Landwirtschaftliche Arbeitsmaschine
- 2.: Auslegerarm
- 3.: Hauptrahmen
- 4.: Arbeitsgerät
- 5.: Entlastungsvorrichtung
- 6.: Klinke
- 7.: Sicherungsvorrichtung
- 8.: Haltelement
- 9.: Aktor
- 10.: Lagerung
- 11.: Roll- und/oder Gleitelement
- 12.: Rad

- a.: Arbeitsbreite
- b.: Transportbreite
- g.: Lotgerade

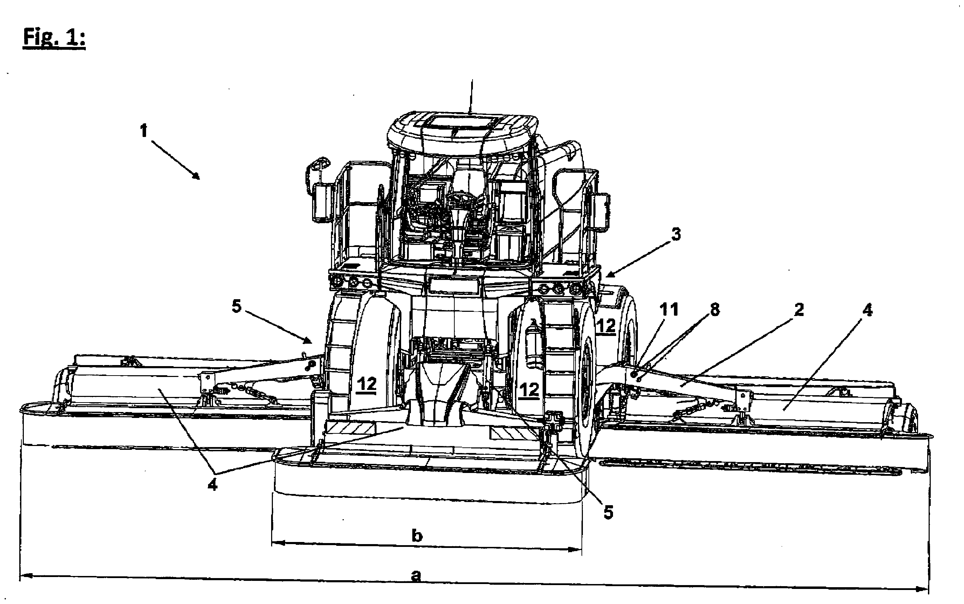

In Fig. 1 wird eine selbstfahrende landwirtschaftliche Arbeitsmaschine 1 in Arbeitsstellung in einer Ansicht von vorne links gezeigt. Diese Darstellung veranschaulicht, warum der Einsatz von Auslegerarmen 2 in vielen Fällen nicht nur praktisch, sondern notwendig ist. Die gezeigte landwirtschaftliche Arbeitsmaschine 1 verfügt über einen Hauptrahmen 2, der sich durch Räder 12 vom Boden abstützt. An dieser landwirtschaftlichen Arbeitsmaschine 1 ist eine Vielzahl von Arbeitsgeräten 4 montiert, bei denen es sich um Rotationsmähwerke handelt. Während das vordere Arbeitsgerät 4 durch eine Entlastungsvorrichtung 5 zum Wechsel zwischen Transport- und Arbeitsstellung einfach ausgehoben werden kann, ergeben sich bei den seitlichen Arbeltsgeräten 4 einige Herausforderungen. Zunächst müssen die seitlichen Arbeitsgeräte 4 für den Transport eingeklappt oder verschwenkt werden können. Um gleichzeitig eine hervorragende Bodenkopierung erreichen zu können, werden die seitlichen Arbeitsgeräte 4 von einem Auslegerarm 2 jeweils in ihrer Mitte gehalten. Um die Arbeitsgeräte 4 nicht mit seinem gesamten Eigengewicht auf den Erdboden wirken zu lassen, werden Entlastungsvorrichtungen 5 eingesetzt, in diesem Fall je ein einfachwirkender Hydraulikzylinder. Der einfachwirkende Hydraulikzylinder ist demnach mit dem Auslegerarm 2 und dem Hauptrahmen 3 verbunden und ist so In der Lage, die Gewichtskraft des Arbeitsgerätes 4 mit einer entgegengesetzten Kraft zu kontern, bzw. auf den Hauptrahmen 3 zu transferieren. Weiterhin ist die Entlastungseinheit 5 in der Lage, die Klappbewegungen des Auslegerarms 2 in eine Vorgewendestellung, sowie in die Transportstellung durchzuführen. Die Bauform des Auslegerarms 2 lässt erkennen, dass der Schwerpunkt der Kombination aus Auslegerarm 2 und Arbeitsgerät 4 auf einer dem Hauptrahmen 2 zugewandten Seite der Ebene liegt, welche von einer Lotgeraden g und der Klappachse des Auslegerarms 2 gebildet wird. Die Entlastungsvorrichtung 5 ist durch ihre Bauart nicht in der Lage, eine Rückführung der Kombination aus Auslegerarm 2 und Arbeitsgerät 4 in die Arbeitsstellung herbeizuführen. An dieser Stelle hilft die beanspruchte Erfindung trickreich aus.

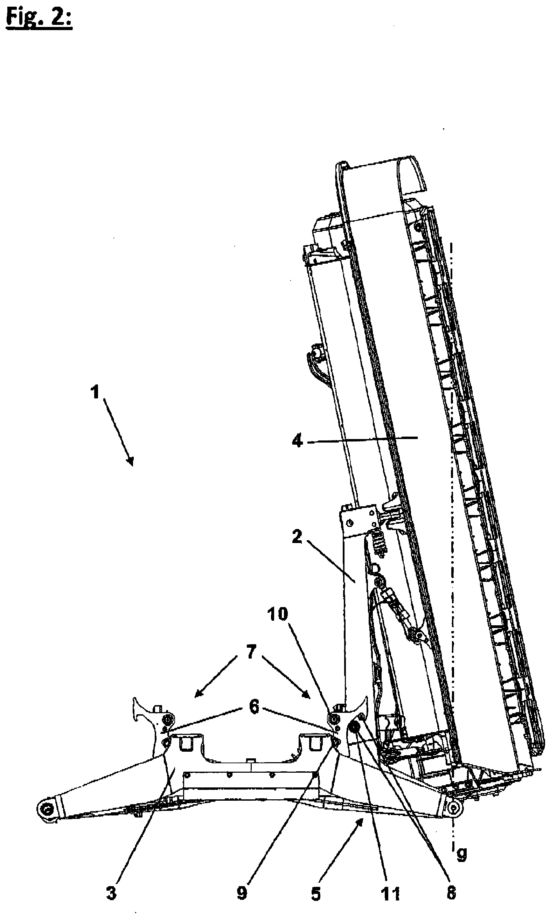

Die Wirkweise der Erfindung wird in den Figuren Fig. 2, Fig. 3 und Flg. 4 verdeutlicht. Betrachtet man zunächst Fig. 2, wird zuvor genannte Problematik mit dem Schwerpunkt der Kombination von Auslegerarm 2 und Arbeitsgerät 4 nochmals deutlicher. Der Auslegerarm 2 ist eingeklappt, sodass das Arbeitsgerät 4 eine platzsparende Transportstellung einnimmt. Die Klinke 6 der Sicherungsvorrichtung 7 umschließt dabei ein Halteelement 8 am Auslegerarm 2 und bildet so eine formschlüssige Verbindung zwischen Hauptrahmen 3 und dem Auslegerarm 2.

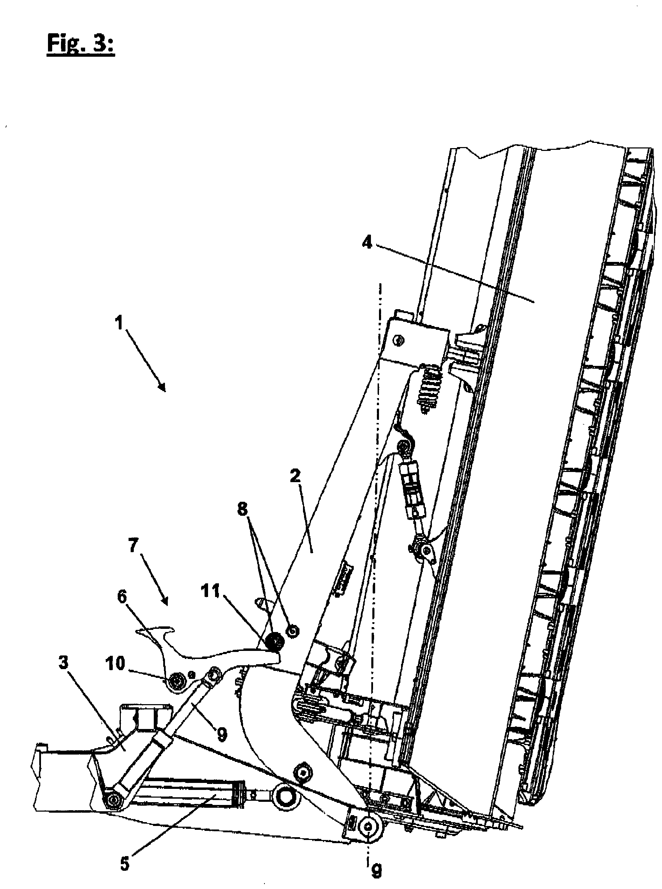

Sobald ein zu bearbeitendes Feld erreicht wird und die Transportstellung des Arbeitsgerätes 4 in die Vorgewende- oder Arbeitsstellung überführt werden kann, kommt die Besonderheit der beanspruchten Erfindung zum Tragen. Wie Fig.3 zeigt, wird die formschlüssige Verbindung gelöst, indem der Aktor 9 die besonders geformte Klinke 6 verschiebt, sodass durch die Lagerung 10 der Klinke 6 eine Drehbewegung erfolgt. Durch diese Drehbewegung wird die Klinke 6 nach oben hin vom Halteelement 8 entfernt. Gleichzeitig wirkt ein unterer Abschnitt der Klinke 6 gegen ein dem Halteelement 8 vorgelagertes Roll- und/oder Gleitelement 11. Durch die Kurvenform des unteren Abschnitts der Klinke 6 kann das Roll- und/oder Gleitelement 11, in diesem Fall als Laufrolle ausgeführt, den Auslegerarm 2 gleichmäßig aus seiner ruhenden Position verschieben, bis die Gewichtskraft des Arbeitsgerätes 4 ausreicht, den Auslegerarm 2 weiter auszuklappen, Da zum Ausklappen das Fluid der Entlastungseinheit 5 verdrängt wird, erfolgt ein gleichmäßiges Absenken, bis eine Vorgewendestellung erkannt wird und eine Ventilsteuerung den Vorgang stoppt. Nun kann der Vorgang umgekehrt werden, oder das Arbeitsgerät 4 durch den Auslegerarm 2 in eine Arbeitsstellung abgesenkt werden.

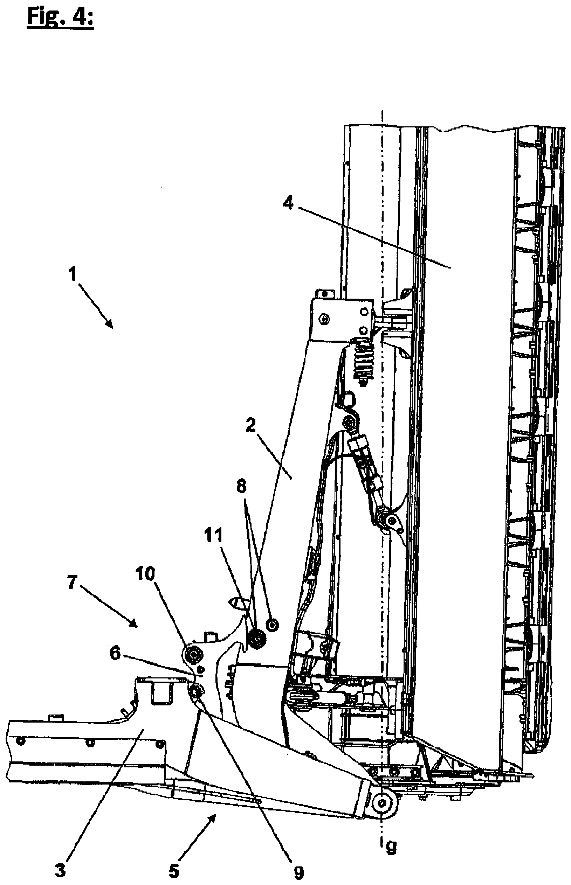

Zur Rückführung des Arbeitsgerätes 4 aus der Arbeitsstellung in die Transportstellung fährt die Entlastungseinheit 5 komplett ein und zieht so den Auslegerarm 2 in Richtung Hauptrahmen 3, etwa wie in Fig.4 erkennbar. Sinnvollerweise schiebt nun der Aktor 9 die Klinke 6 der Sicherungsvorrichtung 7 aufwärts, um diese zu öffnen, Sollte der Aktor 9 dazu aus irgendeinem Grund jedoch nicht zu in der Lage sein, wird vorgeschlagen, die Klinke 6 derart zu gestalten, dass ein Roll- und/oder Gleitelement 11 die Klinke 6 selbst betätigt, ergo nach oben verdrängt. Die anhaltende Klappbewegung des Auslegerarms 2 sorgt sodann für ein vollständiges Verfahren In die Transportstellung und die Klinke 6 kann wieder zurückschnappen und das Halteelement 8 umschließen.

## Patentansprüche

1. Landwirtschaftliche Arbeitsmaschine (1) mit einem Hauptrahmen (3), wenigstens einem an wenigstens einen Auslegerarm (2) angeordneten Arbeitsgerät (4), welches von einer Transportstellung für den Straßenverkehr in eine Arbeitsstellung für die Bearbeitung eines landwirtschaftlichen Feldes und umgekehrt überführbar ist, wobei eine Sicherungsvorrichtung (7) an dem Hauptrahmen (3) angeordnet ist, welche den mindestens einen Auslegerarm (2) mitsamt dem daran angeordneten Arbeitsgerät (4) in der Transportstellung gegen ungewollte Bewegungen arretiert und die Überführung des Auslegerarms (2) mitsamt dem daran angeordneten Arbeitsgerät (4) von der Transportstellung in die Arbeitsstellung zumindest unterstützt, **dadurch gekennzeichnet, dass** die Sicherungsvorrichtung (7) durch wenigstens einen Aktor (9) bei der Überführung des Auslegerarms (2) in die Arbeitsstellung eine zwangsgeführte Bewegung des Auslegerarms (2) bewirkt, wobei eine Klinke (6) der Sicherungsvorrichtung (7) ein Halteelement (8) am Auslegerarm (2) umschließt und so eine formschlüssige Verbindung zwischen dem Hauptrahmen (3) und dem Auslegerarm (2) bildet und dass das an dem Auslegerarm (2) angeordnete Halteelement (8) als Roll- und/oder Gleitelement (11) ausgebildet ist, so dass eine Kurvenform eines unteren Abschnitts der Klinke (6) über das Roll- und/oder Gleitelement (11) den Auslegerarm (2) gleichmäßig aus seiner ruhenden Position verschiebt, bis die Gewichtskraft des Arbeitsgerätes (4) ausreicht, den Auslegerarm (2) weiter auszuklappen.

2. Landwirtschaftliche Arbeitsmaschine (1) nach Anspruch 1, **dadurch gekennzeichnet, dass** die Sicherungsvorrichtung (7) in eingenommener Transportstellung eine formschlüssige Verbindung zwischen dem Auslegerarm (2) und dem Hauptrahmen (3) herstellt.

3. Landwirtschaftliche Arbeitsmaschine (1) nach wenigstens einem der vorherigen Ansprüche, **dadurch gekennzeichnet, dass** das Roll- und/oder Gleitelement (11) an dem Auslegerarm (2) die Sicherungsvorrichtung (7) bei der Überführung in die Transportstellung betätigt.

4. Landwirtschaftliche Arbeitsmaschine (1) nach wenigstens einem der vorherigen Ansprüche, **dadurch gekennzeichnet, dass** es sich bei wenigstens einem Aktor (9) der Sicherungsvorrichtung (7) um eine hydraulische Kolbenzylindereinheit handelt.

5. Landwirtschaftliche Arbeitsmaschine (1) nach wenigstens einem der vorherigen Ansprüche, **dadurch gekennzeichnet, dass** der Aktor (9) der Sicherungsvorrichtung (7) von einem Steuergerät angewiesen werden kann, die Sicherungsvorrichtung (7) bei der Überführung des Auslegerarms (2) in die Transportstellung zunächst in eine Position zu bringen, welche bei der Überführung von der Transportstellung in die Arbeitsstellung die Verbindung zwischen Hauptrahmen (3) und Auslegerarm (2) löst.

6. Landwirtschaftliche Arbeitsmaschine (1) nach wenigstens einem der vorherigen Ansprüche, **dadurch gekennzeichnet, dass** die Sicherungsvorrichtung (7) direkt von dem Aktor (9) betätigt wird.

7. Landwirtschaftliche Arbeitsmaschine (1) nach wenigstens einem der vorherigen Ansprüche, **dadurch gekennzeichnet, dass** die Sicherungsvorrichtung (7) indirekt von dem Aktor (9) betätigt wird.

8. Landwirtschaftliche Arbeitsmaschine (1) nach Anspruch 1, **dadurch gekennzeichnet, dass** es sich um eine landwirtschaftliche Erntemaschine handelt.

9. Landwirtschaftliche Arbeitsmaschine (1) nach Anspruch 1, **dadurch gekennzeichnet, dass** es sich um eine landwirtschaftliche Heuwerbungsmaschine handelt.

## Claims

1. Agricultural machine (1) having a main frame (3), at least one implement (4) which is arranged on at least one cantilever arm (2) and which can be transferred from a transport position for road traffic to a working position for working an agricultural field and vice versa, a safety device (7) being arranged on the main frame (3), which device locks the at least one cantilever arm (2) together with the implement (4) arranged thereon in the transport position against unwanted movements and at least supports the transfer of the cantilever arm (2) together with the implement (4) arranged thereon from the transport position to the working position, **characterised in that** the safety device (7) causes a guided movement of the cantilever arm (2) by at least one actuator (9) when the cantilever arm (2) is transferred to the working position, a latch (6) of the safety device (7) enclosing a holding element (8) on the cantilever arm (2) and thus forming a form-fitting connection between the main frame (3) and the cantilever arm (2) and **in that** the holding element (8) arranged on the cantilever arm (2) is designed as a rolling and/or sliding element (11) so that a curve shape of a lower portion of the latch (6) moves the cantilever arm (2) evenly out of its resting position via the rolling and/or sliding element (11) until the weight of the implement (4) is sufficient to expand the cantilever arm (2) further.

2. Agricultural machine (1) according to claim 1, **characterised in that** the safety device (7) produces a form-fitting connection between the cantilever arm (2) and the main frame (3) in the assumed transport position.

3. Agricultural machine (1) according to at least one of the preceding claims, **characterised in that** the rolling and/or sliding element (11) on the cantilever arm (2) actuates the safety device (7) when it is transferred to the transport position.

4. Agricultural machine (1) according to at least one of the preceding claims, **characterised in that** at least one actuator (9) of the safety device (7) is a hydraulic piston-cylinder unit.

5. Agricultural machine (1) according to at least one of the preceding claims, **characterised in that** the actuator (9) of the safety device (7) can be instructed by a control device to initially move the safety device (7), when the cantilever arm (2) is transferred to the transport position, into a position which, when the transfer from the transport position to the working position is carried out, releases the connection between the main frame (3) and the cantilever arm (2).

6. Agricultural machine (1) according to at least one of the preceding claims, **characterised in that** the safety device (7) is actuated directly by the actuator (9).

7. Agricultural machine (1) according to at least one of the preceding claims, **characterised in that** the safety device (7) is actuated indirectly by the actuator (9).

8. Agricultural machine (1) according to claim 1, **characterised in that** it is an agricultural harvesting machine.

9. Agricultural machine (1) according to claim 1, **characterised in that** it is an agricultural haymaking machine.

## Revendications

1. Engin agricole (1) comportant un châssis principal (3), au moins un outil (4) installé sur au moins un bras déployable (2) qui peut passer d'une position de transport pour circuler sur route à une position de travail pour travailler un champ et inversement,
- le châssis principal (3) comportant un dispositif de sécurité (7) qui assiste le bras déflecteur (2) avec l'outil (4) installé sur celui-ci, en position de transport contre tout mouvement non voulu et pour le passage du bras déployable (2) avec l'outil (4) qu'il porte, de sa position de transport à sa position de travail,
engin agricole **caractérisé en ce que**
- le dispositif de sécurité (7) agit par un moins un actionneur (9) au passage du bras déployable (2) dans sa position de travail, en réalisant un mouvement à guidage forcé du bras déployable (2),
- un verrou (6) du dispositif de sécurité (7) entourant un élément de maintien (8) du bras déployable (2) et réalisant une liaison par la forme entre le châssis principal (3) et le bras déployable (2), et
- l'élément de maintien (8) du bras déployable (2) est sous la forme d'un galet et/ou d'un patin (11) de sorte qu'une forme de came d'un segment inférieur du verrou (6) fait passer le bras déployable (2) sur le galet et/ou le patin (11) à partir de sa position de repos jusqu'à ce que le poids de l'outil (4) soit suffisant pour continuer le déploiement du bras déployable (2).

2. Engin agricole (1) selon la revendication 1,
**caractérisé en ce que**
en position de transport, le dispositif de sécurité (7) réalise une liaison par la forme entre le bras déployable (2) et le châssis principal (3).

3. Engin agricole (1) selon au moins l'une des revendications précédentes,
**caractérisé en ce que**
le galet et/ou le patin (11) du bras déployable (2) actionne le dispositif de sécurité (7) au passage en position de transport.

4. Engin agricole (1) selon au moins l'une des revendications précédentes,
**caractérisé en ce que**
l'actionneur (9) du dispositif de sécurité (7) est une unité de vérin hydraulique.

5. Engin agricole (1) selon au moins l'une des revendications précédentes,
**caractérisé en ce que**
l'actionneur (9) du dispositif de sécurité (7) est commandé par un appareil de commande pour faire passer le dispositif de sécurité (7) au passage du bras déployable (2) en position de transport, tout d'abord dans une position qui, dans le passage de la position de transport à la position de travail, libère la liaison entre le châssis principal (3) et le bras déployable (2).

6. Engin agricole (1) selon au moins l'une des revendications précédentes,
**caractérisé en ce que**
le dispositif de sécurité (7) est manœuvré directement par l'actionneur (9).

7. Engin agricole (1) selon au moins l'une des revendications précédentes,
**caractérisé en ce que**
le dispositif de sécurité (7) est manœuvré indirectement par l'actionneur (9).

8. Engin agricole (1) selon la revendication 1,
**caractérisé en ce que**
l'engin agricole est une machine de récolte.

9. Engin agricole (1) selon la revendication 1,
**caractérisé en ce que**
l'engin agricole est une machine de fenaison.
